# EUROPÄISCHE PATENTSCHRIFT

(11) **EP 1 949 997 B1**
(45) Veröffentlichungstag und Bekanntmachung des Hinweises auf die Patenterteilung: **22.06.2011**
(21) Anmeldenummer: 07124120.2
(22) Anmeldetag: 28.12.2007
(51) Int. Cl.: B23K 9/09, B23K 9/095

(54) **Sanfter Kurzschlusseintritt**
Soft bypass access
Introduction de court-circuit douce

(30) Priorität: 27.01.2007 DE 102007004177
(43) Veröffentlichungstag der Anmeldung: 30.07.2008
(73) Patentinhaber: EWM Hightec Welding GmbH, 56271 Mündersbach (DE)
(72) Erfinder: Goecke, Dr.-Ing. Sven-Frithjof, 56244 Steinen (DE); Knopp, Dipl.-Ing. Norbert, 56337 Arzbach (DE)
(74) Vertreter: Cohausz & Florack

(56) Entgegenhaltungen:
- EP-A- 1 563 938
- JP-A- 57 168 772
- US-A- 4 544 826
- US-A- 4 954 691

## Beschreibung

Die Erfindung betrifft ein Verfahren und eine Vorrichtung zur Steuerung des Ausgangs eines Schweißgerätes zum Abschmelzelektroden-Lichtbogenschweißen enthaltend eine wechselweise getaktete Inverterstromquelle zur Bildung mindestens eines Strompfades zur Versorgung des Schweißprozesses, bei welchem in einer ersten Betriebsphase zwischen der abschmelzenden Schweißelektrode und dem Werkstück in einer Schutzgasatmosphäre ein Lichtbogen gezündet und die Schweißelektrode tropfenartig aufgeschmolzen wird und in einer zweiten Betriebsphase das aufgeschmolzene Material auf das Werkstück übergeht.

Solche Verfahren und zugehörige Vorrichtungen dienen allgemein zum Steuern des Ausgangs einer Schweißenergiequelle, bei dem abwechselnd eine Kurzschlussphase und eine Lichtbogenphase zwischen der Abschmelzelektrode und dem Werkstück stattfinden. Ein solches Verfahren wird allgemein als Kurzlichtbogenschweißen bezeichnet. In der Lichtbogenphase wird das Elektrodenende tropfenartig aufgeschmolzen, wobei aufgrund der stetigen Drahtzufuhr und dem wachsenden Tropfenvolumen nach einer gewissen Zeit eine Berührung des Elektrodenendes mit dem Schmelzbad erfolgt. In dieser damit beginnenden Phase fließt die Schmelze von der Elektrode in das werkstückseitige Schmelzbad und die gebildete "Kurzschlussbrücke" wird durch den sich einstellenden hohen Kurzschlussstrom eingeschnürt und der Lichtbogen zündet neu. Ein Materialübergang findet dabei ausschließlich in der Kurzschlussphase statt. Im Übergangsbereich zwischen dem Ende der Kurzschlussauflösung (im Folgenden auch als "Materialübergang" bezeichnet) und dem Beginn der Wiederzündung des Lichtbogens herrschen schwer definierbare Prozessbedingungen. Aufgrund des im Endbereich der Kurzschlussphase auftretenden hohen Schweißstromes in Verbindung mit einer hohen Schweißprozessspannung kann es zu ungewünschten Schweißspritzern kommen.

Aus der EP 0 743 126 ist eine Inverterstromquelle bekannt, bei der während der abfallenden Schweißstromflanke eine Gegenspannungsquelle einem sekundärseitigen Strompfad in Reihe zuschaltbar ist, deren Polarität so gerichtet ist, dass sich ihr Spannungswert während der abfallenden Flanke zur Schweißprozessspannung hinzuaddiert. Dies hat zur Folge, dass der Schweißstrom schneller auf einen niedrigen Wert abgesenkt wird, als wenn er aufgrund der ohne die Gegenspannungsquelle vorhandenen Schaltungsbedingungen abklingen würde.

Zusätzlich ist es aus der DE 10 2004 0007 059 A1 bekannt, zwecks Erreichens einer möglichst geringen Spritzerbildung eine Vorrichtung bzw. ein Verfahren dahingehend zu verbessern, dass synchronisiert mit der Taktfrequenz der Inverterstromquelle für den Augenblickswert der Schweißprozessspannung repräsentative Messwerte erfasst werden und beim Erreichen einer ersten Vorgabebedingung für den Augenblickswert der Schweißprozessspannung die Gegenspannung zugeschaltet wird. In Folge dessen sind die für den Augenblickswert der Schweißprozessspannung repräsentativen Messwerte taktgenau verfügbar und es kann in Abhängigkeit von dem gemessenen Augenblickswert der Schweißprozessspannung das Zuschalten der Gegenspannung zeitgenau dahingehend erfolgen, dass in der Kurzschlussphase ein schnellerer Abfall des Schweißstromes erreicht wird. Hierdurch wird eine merkliche Reduzierung der Schweißspritzerbildung erreicht. Wenngleich die beschriebenen Verfahren bzw. Vorrichtungen des Standes der Technik bereits eine erhebliche Verbesserung im Hinblick auf die Spritzerbildung darstellen, ist dieses Problem noch nicht vollständig zu vermeiden, da sowohl beim Eintritt als auch beim Aufreißen des Kurzschlusses hohe Strom- bzw. Spannungsveränderungsraten zu verzeichnen sind.

Der Erfindung liegt die Aufgabe zugrunde, bei einer Vorrichtung bzw. einem Verfahren der eingangs genannten Art eine weitere Reduzierung der Spritzerbildung zu erreichen.

Diese Aufgabe wird erfindungsgemäß bei einem Verfahren der eingangs genannten Art dadurch gelöst, dass beim Auftreten einer ersten und einer zweiten für den Materialübergang relevanten Vorgabebedingung für den Augenblickswert eines Schweißprozessparameters, insbesondere Strom, Spannung, Leistung, Widerstand, in dem mindestens einen Strompfad eine der Inverterspannung entgegengerichtete Gleichspannung zur Unterstützung der Steilheit des Stromabfalls zugeschaltet wird wobei zusätzlich zu der Erfassung des Auftretens der ersten Vorgabebedingung, die repräsentativ für den Beginn des Kurzschlusszustandes infolge eines Tropfenüberganges in der zweiten Betriebsphase ist, eine zweite Vorgabebedingung erfasst wird, welche repräsentativ für das Ende des Kurzschlusszustandes im Anschluss an den Übergang dieses Tropfens ist.

Bei einer Vorrichtung der eingangs genannten Art wird diese Aufgabe dadurch gelöst, dass beim Auftreten einer ersten und einer zweiten für den Materialübergang relevanten Vorgabebedingung für den Augenblickswert eines Schweißprozessparameters, insbesondere Strom, Spannung, Leistung, Widerstand, in dem mindestens einen Strompfad eine der Inverterspannung entgegengerichtete Gleichspannung zur Unterstützung der Steilheit des Stromabfalls zugeschaltet wird und wobei von der Taktfrequenz der Inverterstromquelle angesteuerte Synchronisierungsmittel vorgesehen sind, durch welche sowohl Detektormittel zur Erfassung einer für den Augenblickswert der Schweißprozessspannung repräsentativen Größe als auch die Steuermittel angesteuert werden, wobei den Steuermitteln Vorgabemittel derart zugeordnet sind, dass zusätzlich zu der Erfassung des Auftretens der ersten Vorgabebedingung, die repräsentativ für den Beginn des Kurzschlusszustandes infolge eines Tropfenüberganges in der zweiten Betriebsphase ist, eine zweite Vorgabebedingung erfasst wird, welche repräsentativ für das Ende des Kurzschlusszustandes im Anschluss an den Übergang dieses Tropfens ist.

Die Erfindung zeichnet sich dadurch aus, dass durch eine verbesserte Schweißverfahrensführung sowohl beim Eintritt des Kurzschlusses als auch bei dessen Auflösung im Falle eines Eintropfenübergangs Schweißspritzer weiter deutlich herabgesetzt werden. Dies wird dadurch erreicht, dass zum Einen im Moment des Eintrittes des Kurzschlusses beim Beginn des Tropfenübergangs die Schweißprozessleistung aktiv in Folge des Anlegens der Gegenspannung herabgeführt werden. In Ergänzung dazu wird beim Erreichen der zweiten Vorgabebedingung kennzeichnend für das Ende des Kurzschlusszustandes im Anschluss an den Übergang dieses Tropfens in gleicher Weise durch das Zuschalten der Gegenspannung ein aktives Herabführen des oder der Prozessparameter und damit eine spritzerfreie Auflösung der Materialbrücke erreicht.

Eine vorteilhafte Ausführungsform der Erfindung sieht vor, dass für den Augenblickswert des Schweißprozessparameters repräsentative Messwerte synchronisiert mit der Taktfrequenz der Inverterstromquelle erfasst werden, wobei von weiterem Vorteil ist, wenn die Erfassung der für den Augenblickswert des Schweißprozessparameters repräsentativen Messwerte in der Pulspause (t₂) der Inverterspannung erfolgt.

Gemäß der Lehre der Erfindung kommt als für den Augenblickswert des Schweißprozessparameters repräsentativer Messwert sowohl der momentane Wert der Schweißspannung als auch der momentane Wert des Schweißstromes in Frage. Alternativ oder ergänzend dazu kann auch der Quotient von Schweißspannung und Schweißstrom, also der Widerstand als repräsentativer Messwert erfasst werden oder das Produkt aus Schweißspannung und Schweißstrom, also die Schweißleistung.

Alternativ oder ergänzend dazu kann als für den Augenblickswert des Schweißprozessparameters repräsentativer Messwert auch der momentane Wert eines der Parameter Lichtstrahlung, Schall, elektrisches Feld oder magnetisches Feld fungieren.

Von besonderer Bedeutung für die Erfindung ist, dass auch die zweite Vorgabebedingung, welche repräsentativ für das Ende des Kurzschlusszustandes im Anschluss an den Tropfenübergang ist, entweder von der Amplitude des Schweißstromes, von der Amplitude der Schweißspannung, von dem Produkt der Augenblickswerte von Schweißspannungswert und Schweißstrom oder von dem Quotienten der Augenblickswerte von Schweißspannung und Schweißstrom bestimmt sein kann.

Alternativ oder ergänzend dazu können auch die die zweite Vorgabebedingung repräsentierenden Prozessparameter die Lichtstrahlung, der Schall, das elektrische Feld oder das magnetische Feld sein.

Schließlich beinhaltet die Erfindung auch, dass die Bildung der Funktionen für die Vorgabebedingungen mindestens teilweise durch Software erfolgt.

Schließlich bezieht sich die Erfindung allgemein auf solche Schweißprozesse, bei denen ein Tropfenübergang im Kurzschlussfall stattfindet unabhängig davon, ob es sich um einen sogenannten Kurzlichtbogen oder um einen gepulsten Prozess handelt.

Die Erfassung einer für den Augenblickswert der Schweißprozessspannung repräsentativen Größe erfolgt dabei vorzugsweise innerhalb der Schweißstromquelle, insbesondere innerhalb des Gehäuses der Schweißstromquelle.

Die Erfindung wird im Folgenden anhand eines Ausführungsbeispiels näher erläutert. Dabei zeigen
Figur 1 das Blockschaltbild einer Schweißstromquelle gemäß Ausführungsbeispiel der Erfindung;
Figur 2 eine prinzipielle Darstellung zur Erläuterung der zeitlichen Verläufe der Schweißprozessspannung und des Schweißstromes, korreliert mit den unterschiedlichen Schweißprozesszuständen;
Figur 3 einen zeitlichen Ausschnitt aus der Darstellung nach Figur 2 im Bereich des Materialübergangs vor dem Wiederzünden des Lichtbogens, gemäß Ausführungsbeispiel der Erfindung.

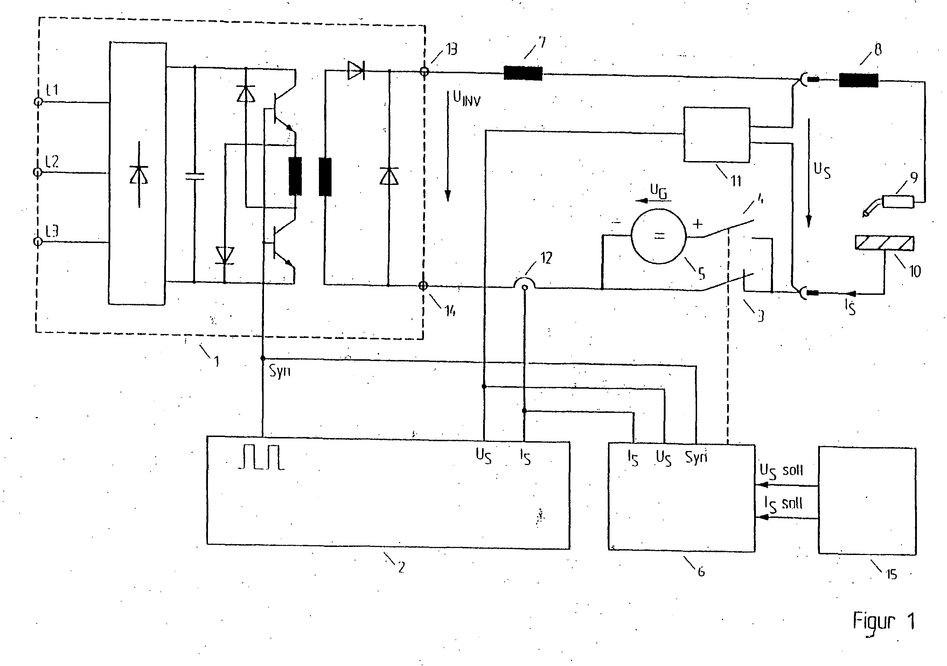

Das in Figur 1 dargestellte Blockschaltbild für ein Schweißgerät gemäß dem Ausführungsbeispiel der Erfindung zeigt zunächst eine allgemein mit dem Bezugszeichen 1 bezeichnete Inverterstromquelle, die aus einem wechselstromgespeisten Gleichrichter, einem Zwischenkreis sowie einem primärseitig wechselseitig getaktetem Stromwandler besteht, welcher sekundärseitig einen Strompfad aufweist, welcher zur Speisung des Schweißprozesses 9,10 dient. Gegenüber der auf einem Bezugspotential liegenden Gegenelektrode 10 ist mit 9 die Schweißelektrode bezeichnet. Im sekundärseitigen Strompfad der Inverterstromquelle 1 ist eine Gleichrichterdiode vorgesehen.

Im Schweißstromkreis liegt zunächst eine Drossel 7 sowie die die Leitungsinduktivität der Zuleitung zum Schweißprozess darstellende weitere Induktivität 8. Zur Entladung der aus den Induktivitäten 7 und 8 gebildeten Gesamtinduktivität während des Rückstromes dient eine Freilaufdiode.

In Reihe zum Schweißprozess 9,10 ist eine Gleichspannungsquelle 5 vorgesehen, deren Polarität, gekennzeichnet durch die Zeichen +,- so gewählt ist, dass diese während der abfallenden Flanke des Schweißstromes gleichsinnig gerichtet ist zu der am Schweißprozess 9,10 anliegenden Spannung. Über das Schalterpaar 3,4 kann die Gegenspannungsquelle 5 zugeschaltet bzw. überbrückt werden, wobei bei der Überbrückung der Schalter 3 geschlossen und der Schalter 4 geöffnet und bei Wirksamkeit der Gegenspannungsquelle 5 der Schalter 3 geöffnet bzw. der Schalter 4 geschlossen ist.

Das Öffnen bzw. Schließen der Schalter 3,4 wird durch eine Steuereinheit 6 bestimmt, welcher eine Vorgabeeinheit 15 zur Vorgabe von Sollwerten U_{Ssoll}, I_{Ssoll} zugeordnet ist. Parallel zur Steuereinheit 6 ist eine Synchronisiereinheit 2 vorgesehen, welche mit der Taktfrequenz der Inverterstromquelle 1 synchronisiert ist. An den Eingang der Synchronisiereinrichtung 2 gelangt das Ausgangssignal einer ersten Detektoreinrichtung 11, welche die Schweißprozessspannung Uₛ unmittelbar an den äußeren Anschlussleitungen des Schweißgerätes 9,10 erfasst. Über eine weitere Detektoreinrichtung 12 wird der Istwert des Schweißstromes Iₛ ebenfalls jeweils als Augenblickswert erfasst und an die Synchronisiereinrichtung 2 übertragen. Die Augenblickswerte der Schweißprozessspannung Uₛ bzw. des Schweißstromes Iₛ liegen ebenso an der Steuereinrichtung 6 an. Die Vorgabeeinrichtung 15 weist Sollwerte für die Schweißprozessspannung Uₛ bzw. den Schweißstrom Iₛ auf. Diese Sollwerte werden in Zusammenhang mit den Prozessvorgaben, z.B. dem Drahtdurchmesser, dem Schweißelektrodenmaterial, dem Schweißgas oder dem verwendeten Schweißverfahren abgeleitet.

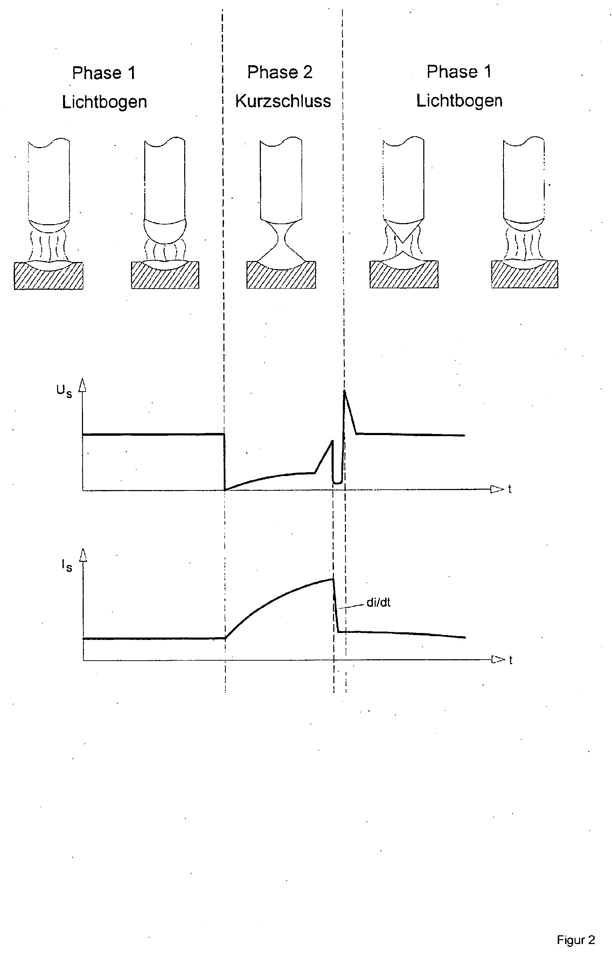

Eine Darstellung des zeitlichen Verlaufes der Schweißprozessspannung Uₛ bzw. des Schweißprozessstromes Iₛ ist Figur 2 zu entnehmen, korreliert mit den jeweiligen Zuständen des Schweißprozesses.

Die erfindungsgemäße Vorrichtung arbeitet wie folgt:

Zunächst zeigt Figur 2, dass in einer ersten Prozessphase, in der der Lichtbogen brennt (Phase 1, Lichtbogen), jedoch noch kein Materialübertrag zwischen Schweißelektrode und Werkstück erfolgt, ein nahezu konstanter Schweißstrom und eine nahezu konstante Schweißprozessspannung vorhanden sind. Im Moment der Verflüssigung des tropfenförmigen Elektrodenendes, also zu Beginn der Kurzschlussphase (Phase 2) bricht die Schweißprozessspannung zusammen und der Schweißstrom beginnt, einen Anstieg vorzunehmen. Im Verlaufe der Kurzschlussphase kommt es zu einer Einschnürung des tropfenartig aufgeschmolzenen Elektrodenbereichs und zum Ende der Kurzschlussphase hin zum sogenannten Materialübergang, der den Beginn der nächsten Phase 1 ("Lichtbogenphase") einleitet. Der Moment der Kurzschlussauflösung ("Materialübergang") ist erkennbar anhand des Auftretens eines sog. "Auslöseparameters", welcher z.B. durch einen plötzlichen Anstieg der Schweißspannung oder des Schweißstromes oder der Leistung oder des Widerstands repräsentiert ist. Die Messung des Auslöseparameters erfolgt in der Taktpause des Inverters. Durch die geeignete Festlegung der Kriterien für den Auslöseparameter wird nun erreicht, dass möglichst genau zum Zeitpunkt der Kurzschlussauflösung ("Materialübergang") die Gegenspannung in den Strompfad zugeschaltet wird, so dass nach dem Zuschalten der Gegenspannung sowohl Strom als auch Spannung absinken. Dabei kann die Steilheit der abfallenden Flanke des Schweißstroms durch die Amplitude der Gegenspannung eingestellt werden.

Das nachfolgende Wiederzünden des Lichtbogens kann dann bei niedrigem Strom und damit leistungsarm erfolgen, so dass Schweißspritzer weitgehend vermieden werden.

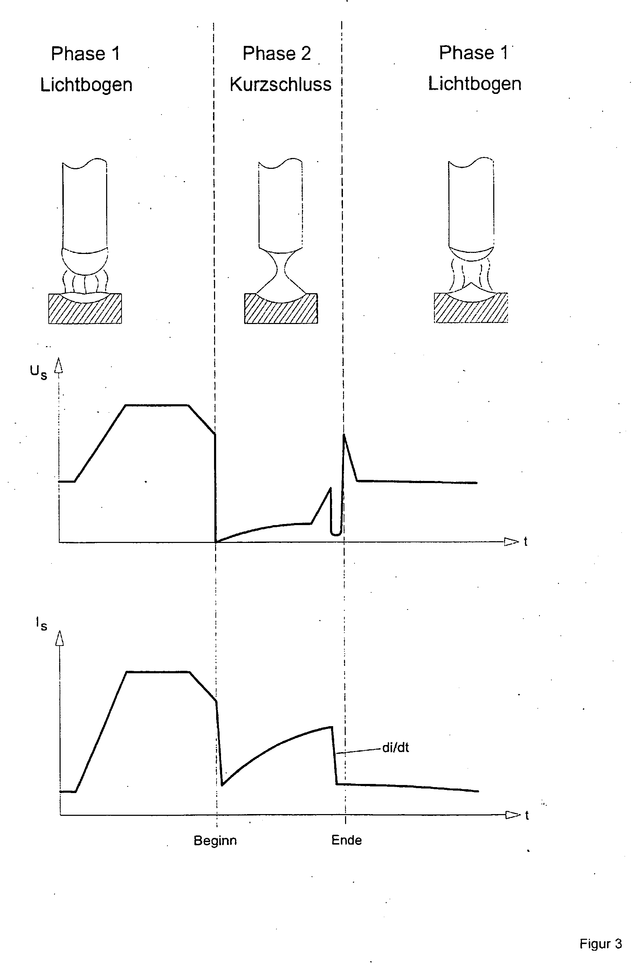

Figur 3 zeigt einen zeitlich gestreckten Verlauf der Schweißspannung Uₛ und des Schweißstromes Iₛ, insbesondere im Bereich der Übergangsphase zwischen der Bildung des Kurzschlusses und dem Wiederzünden. In seinem zeitlichen Verlauf zeigt die Darstellung nach Figur 3 einen typischen Pulsprozess bei dem zunächst ein Anstieg auf ein hohes, über einen bestimmten Zeitabschnitt gehaltenes Stromniveau erfolgt. In diesem Zeitabschnitt wird der schmelzflüssige Tropfen an der Elektrodenspitze derart geformt, dass er kurz vor dem Berühren mit dem Werkstück steht. Sobald über die Detektormittel 11 festgestellt wird, dass einer der Schweißprozessparameter (oder wie hier, beide) die erste Vorgabebedingung erkennen lassen, wird über die Steuermittel 6 im Strompfad die der Inverterspannung entgegengerichtete Gleichspannung 5 zugeschaltet. Dies hat zur Folge, dass der Spannungsabfall und damit auch der Abfall des Schweißstromes schneller erfolgt als wenn er "natürlich" unter den gegebenen schaltungstechnischen Bedingungen abklingen würde. Sobald Strom bzw. Schweißspannung abgeklungen sind auf das Niveau in der Nähe von Null, wird die Gegenspannung 5 wieder abgeschaltet. Innerhalb der weiter laufenden Kurzschlussphase wird die Spannung wieder erhöht, damit der Tropfenübergang weiter ablaufen kann.

Wird dann beim weiteren Übergang dieses Tropfens der Zeitpunkt erreicht, bei dem sich die Materialbrücke zwischen Elektrode und Werkstück auflöst, d.h. der Kurzschluss abbricht, wird von den Detektormitteln 11 das Vorliegen der zweiten Vorgabebedingung erfasst, welcher repräsentativ für das Ende des Kurzschlusszustandes im Anschluss an den Tropfenübergang ist. In diesem Moment wird wiederum das Zuschalten der Gegenspannung 5 über die Steuermittel 6 im Strompfad veranlasst. Ebenso wie zuvor im Zusammenhang mit dem Kurzschlusseintritt beschrieben erfolgt auch bei der Auflösung des Kurzschlusses durch das Zuschalten der Gegenspannung 5 zu diesem Zeitpunkt eine aktive Herabführung der Schweißspannung auf ein niedriges Niveau und in Folge der Gegenspannung auch ein deutlich beschleunigter Stromabfall im Vergleich zu den "natürlichen" Schaltungsbedingungen.

Unmittelbar nach Abklingen des Stromes erfolgt das Wiederzünden des Lichtbogens erkennbar an dem plötzlichen Spannungsanstieg und einem gemäßigtem Anstieg des Stromes.

Durch die im Zusammenhang mit dem Ausführungsbeispiel gestellten Maßnahmen wird somit ein Kurzschlusseintritt und eine Kurzschlussauflösung erreicht, die wesentlich schonender, sanfter abläuft als dies beim Stand der Technik der Fall ist.

## Patentansprüche

1. Verfahren zur Steuerung des Ausgangs eines Schweißgerätes zum Abschmelzelektroden-Lichtbogenschweißen enthaltend eine wechselweise getaktete Inverterstromquelle zur Bildung mindestens eines Strompfades zur Versorgung des Schweißprozesses, bei welchem in einer ersten Betriebsphase zwischen der abschmelzenden Schweißelektrode (9) und dem Werkstück (10) in einer Schutzgasatmosphäre ein Lichtbogen gezündet und die Schweißelektrode (9) tropfenartig aufgeschmolzen wird und in einer zweiten Betriebsphase das aufgeschmolzene Material auf das Werkstück (10) übergeht, **dadurch gekennzeichnet, dass** beim Auftreten einer ersten und einer zweiten, für den Materialübergang relevanten Vorgabebedingung für den Augenblickswert eines Schweißprozessparameters, insbesondere Strom, Spannung, Leistung, Widerstand, in dem mindestens einen Strompfad eine der Inverterspannung entgegengerichtete Gleichspannung (5) zur Unterstützung der Steilheit des Stromabfalls zugeschaltet wird, wobei zusätzlich zu der Erfassung des Auftretens der ersten Vorgabebedingung, die repräsentativ für den Beginn des Kurzschlusszustandes infolge eines Tropfenüberganges in der zweiten Betriebsphase ist, eine zweite Vorgabebedingung erfasst wird, welche repräsentativ für das Ende des Kurzschlusszustandes im Anschluss an den Übergang dieses Tropfens ist.

2. Verfahren nach Anspruch 1, **dadurch gekennzeichnet, dass** für den Augenblickswert des Schweißprozessparameters repräsentative Messwerte synchronisiert mit der Taktfrequenz der Inverterstromquelle erfasst werden.

3. Verfahren Anspruch 2, **dadurch gekennzeichnet, dass** die Erfassung der für den Augenblickswert des Schweißprozessparameters repräsentativen Messwerte in der Pulspause (t₂) der Inverterspannung erfolgt.

4. Verfahren zur Steuerung eines Schweißgerätes nach Anspruch 1, **dadurch gekennzeichnet, dass** als für den Augenblickswert des Schweißprozessparameters repräsentativer Messwert der momentane Wert der Schweißspannung (U) erfasst wird.

5. Verfahren nach Anspruch 4, **dadurch gekennzeichnet, dass** als für den Augenblickswert der Schweißprozessspannung repräsentativer Messwert die Breite des Pulses (t₁) der Inverterspannung erfasst wird.

6. Verfahren zur Steuerung eines Schweißgerätes nach Anspruch 1, **dadurch gekennzeichnet, dass** als für den Augenblickswert des Schweißprozessparameters repräsentativer Messwert der momentane Wert des Schweißstromes (I) erfasst wird.

7. Verfahren zur Steuerung eines Schweißgerätes nach Anspruch 1, **dadurch gekennzeichnet, dass** als für den Augenblickswert des Schweißprozessparameters repräsentativer Messwert der momentane Wert des Widerstandes (R) erfasst wird.

8. Verfahren zur Steuerung eines Schweißgerätes nach Anspruch 1, **dadurch gekennzeichnet, dass** als für den Augenblickswert des Schweißprozessparameters repräsentativer Messwert der momentane Wert der Schweißleistung (P) erfasst wird.

9. Verfahren zur Steuerung eines Schweißgerätes nach Anspruch 1, **dadurch gekennzeichnet, dass** als für den Augenblickswert des Schweißprozessparameters repräsentativer Messwert der momentane Wert eines der Parameter Schall, elektrisches Feld oder magnetisches Feld sowie Strahlung, insbesondere Wärmestrahlung oder Lichtstrahlung, erfasst wird.

10. Verfahren zur Steuerung eines Schweißgerätes nach Anspruch 1, **dadurch gekennzeichnet, dass** die zweite Vorgabebedingung von der Amplitude des Augenblickswertes des Schweißstromes bestimmt ist.

11. Verfahren zur Steuerung eines Schweißgerätes nach Anspruch 1, **dadurch gekennzeichnet, dass** die zweite Vorgabebedingung von dem Produkt der Augenblickswerte von Schweißspannungswert und Schweißstrom bestimmt ist.

12. Verfahren zur Steuerung eines Schweißgerätes nach Anspruch 1, **dadurch gekennzeichnet, dass** die zweite Vorgabebedingung von dem Quotienten der Augenblickswerte von Schweißspannungswert und Schweißstrom bestimmt ist.

13. Verfahren zur Steuerung eines Schweißgerätes nach Anspruch 1, **dadurch gekennzeichnet, dass** die zweite Vorgabebedingung von vorbestimmten Prozessparametern, nämlich Schall, elektrisches Feld oder magnetisches Feld oder Strahlung, insbesondere Wärmestrahlung bzw. Lichtstrahlung bestimmt ist.

14. Verfahren zur Steuerung eines Schweißgerätes nach einem der vorgenannten Ansprüche,
**dadurch gekennzeichnet, dass** die Bildung der Funktionen für die Vorgabebedingungen mindestens teilweise durch Software erfolgt.

15. Schweißgerät zum Abschmelzelektroden-Lichtbogenschweißen mit einer wechselstromgespeisten wechselweise getakteten Inverterstromquelle, die mindestens einen Strompfad zur Versorgung eines Schweißprozesses (9, 10) speist, bei welchem in einer ersten Betriebsphase zwischen der abschmelzenden Schweißelektrode (9) und dem Werkstück (10) in einer Schutzgasatmosphäre ein Lichtbogen gezündet und die Schweißelektrode (9) tropfenartig aufgeschmolzen wird und in einer zweiten Betriebsphase das aufgeschmolzene Material auf das Werkstück (10) übergeht, **dadurch gekennzeichnet, dass** Synchronisierungsmittel (2), Steuermittel (6), Detektormittel (11) und Vorgabemittel (15) vorgesehen sind, die so ausgebildet sind, dass beim Auftreten einer ersten und einer zweiten, für den Materialübergang relevanten Vorgabebedingung für den Augenblickswert eines Schweißprozessparameters, insbesondere Strom, Spannung, Leistung, Widerstand, in dem mindestens einen Strompfad über Steuermittel (6) eine der Inverterspannung entgegengerichtete Gleichspannung (5) zur Unterstützung der Steilheit des Stromabfalls zugeschaltet wird, wobei die Synchronisierungsmittel (2) von der Taktfrequenz der Inverterstromquelle angesteuert werden, und die Synchronisierungsmittel (2) sowohl die Detektormittel (11) zur Erfassung einer für den Augenblickswert der Schweißprozessspannung repräsentativen Größe als auch die Steuermittel (6) angesteuern, wobei den Steuermitteln (6) Vorgabemittel (15) derart zugeordnet sind, dass zusätzlich zu der Erfassung des Auftretens der ersten Vorgabebedingung, die repräsentativ für den Beginn des Kurzschlusszustandes infolge eines Tropfenüberganges in der zweiten Betriebsphase ist, eine zweite Vorgabebedingung erfasst wird, welche repräsentativ für das Ende des Kurzschlusszustandes im Anschluss an den Übergang dieses Tropfens ist.

16. Schweißgerät nach Anspruch 15, **dadurch gekennzeichnet, dass** die Detektormittel (11) zur Erfassung einer für den Augenblickswert des Schweißstromes repräsentativen Größe ausgebildet sind.

17. Schweißgerät nach Anspruch 15, **dadurch gekennzeichnet, dass** die Detektormittel (11) zur Erfassung einer für den Augenblickswert der Schweißprozessspannung direkt am Schweißprozess ausgebildet sind.

18. Schweißgerät nach Anspruch 15, **dadurch gekennzeichnet, dass** es als ein Schweißgerät zur Speisung eines pulsförmigen Schweissprozesses ausgebildet ist.

## Claims

1. Method for controlling the output of a welding device for consumable electrode arc welding, containing an alternately clocked inverter current source for forming at least one current path for supplying the welding process, in which, in a first operating phase an arc is ignited in a protective gas atmosphere between the consumable welding electrode (9) and the workpiece (10) and the welding electrode (9) is fused on drop-by-drop and, in a second operating phase, the fused-on material transfers onto the workpiece (10), **characterised in that** upon the meeting of a first and a second preset condition for the instantaneous value of a welding process parameter which is relevant for the material transfer, particularly current, voltage, power, resistance, at which at least one DC voltage (5) directed counter to the inverter voltage is connected to the current path in order to support the steepness of the current drop, wherein additionally to the detection of the meeting of the first preset condition, which is representative for the start of the short-circuit state as a consequence of the transfer of a drop in the second operating phase, a second preset condition is detected, which is representative for the end of the short-circuit state subsequently to the transfer of this drop.

2. Method according to Claim 1, **characterised in that** measured values representative for the instantaneous value of the welding process parameter are detected synchronously with the clock frequency of the inverter current source.

3. Method according to Claim 2, **characterised in that** the detection of the measured values representative for the instantaneous value of the welding process parameter takes place in the pulse pause interval (t₂) of the inverter voltage.

4. Method for controlling a welding device according to Claim 1, **characterised in that** the instantaneous value of the welding voltage (U) is detected as representative measured value for the instantaneous value of the welding process parameter.

5. Method according to Claim 4, **characterised in that** the width of the pulse (t₁) of the inverter voltage is detected as measured value representative for the instantaneous value of the welding process voltage.

6. Method for controlling a welding device according to Claim 1, **characterised in that** the instantaneous value of the welding current (I) is detected as representative measured value for the instantaneous value of the welding process parameter.

7. Method for controlling a welding device according to Claim 1, **characterised in that** the instantaneous value of the resistance (R) is detected as representative measured value for the instantaneous value of the welding process parameter.

8. Method for controlling a welding device according to Claim 1, **characterised in that** the instantaneous value of the welding power (P) is detected as representative measured value for the instantaneous value of the welding process parameter.

9. Method for controlling a welding device according to Claim 1, **characterised in that** the instantaneous value of one of the parameters sound, electric field or magnetic field, as well as radiation, in particular heat radiation or light radiation is detected as representative measured value for the instantaneous value of the welding process parameter.

10. Method for controlling a welding device according to Claim 1, **characterised in that** the second preset condition is determined by the amplitude of the instantaneous value of the welding current.

11. Method for controlling a welding device according to Claim 1, **characterised in that** the second preset condition is determined by the product of the instantaneous values of welding voltage value and welding current.

12. Method for controlling a welding device according to Claim 1, **characterised in that** the second preset condition is determined by the quotient of the instantaneous values of welding voltage value and welding current.

13. Method for controlling a welding device according to Claim 1, **characterised in that** the second preset condition is determined by predetermined process parameters, namely sound, electric field or magnetic field or radiation, particularly heat radiation or light radiation.

14. Method for controlling a welding device according to any one of the preceding claims, **characterised in that** the formation of the functions for the preset conditions takes place at least to some extent by means of software.

15. Welding device for consumable electrode arc welding, with an alternating-current fed alternately clocked inverter current source which feeds at least one current path for supplying a welding process (9, 10), in which, in a first operating phase an arc is ignited in a protective gas atmosphere between the consumable welding electrode (9) and the workpiece (10) and the welding electrode (9) is fused on drop-by-drop and in a second operating phase, the fused-on material transfers onto the workpiece (10), **characterised in that** synchronising means (2), control means (6), detector means (11) and presetting means (15) are provided, which are constructed in such a manner that upon the meeting of a first and a second preset condition for the instantaneous value of a welding process parameter which is relevant for the material transfer, particularly current, voltage, power, resistance, at which at least one DC voltage (5) directed counter to the inverter voltage is connected to a current path via control means (6) in order to support the steepness of the current drop, wherein the synchronising means (2) are controlled by the clock frequency of the inverter current source and the synchronising means (2) control both the detector means (11) for detecting a value representative for the instantaneous value of the welding process voltage and the control means (6), wherein presetting means (15) are assigned to the control means (6) in such a manner that additionally to the detection of the meeting of the first preset condition, which is representative for the start of the short-circuit state as a consequence of the transfer of a drop in the second operating phase, a second preset condition is detected, which is representative for the end of the short-circuit state subsequently to the transfer of this drop.

16. Welding device according to Claim 15, **characterised in that** the detector means (11) are constructed for detecting a value representative for the instantaneous value of the welding current.

17. Welding device according to Claim 15, **characterised in that** the detector means (11) are constructed for detecting one representative for the instantaneous value of the welding process voltage directly at the welding process.

18. Welding device according to Claim 15, **characterised in that** it is constructed as a welding device for feeding a pulsed welding process.

## Revendications

1. Procédé de commande de la sortie d'un appareil de soudure pour la soudure à l'arc électrique à électrodes consommables contenant une source d'alimentation électrique à onduleur synchronisée alternativement pour former au moins une branche de circuit pour alimenter le processus de soudure, dans lequel dans une première phase de fonctionnement entre l'électrode de soudure consommable (9) et la pièce à usiner (10) dans une atmosphère de gaz protecteur un arc électrique est allumé et l'électrode de soudure (9) est fondue en forme de goutte et dans une deuxième phase de fonctionnement le matériau fondu est transféré sur la pièce à usiner (10), **caractérisé en ce que** lors de l'occurrence d'une première et d'une deuxième condition de consigne pertinente pour le transfert de matériau pour la valeur instantanée d'un paramètre de processus de soudure, notamment courant, tension, puissance, résistance, une tension continue (5) inverse de la tension d'onduleur est raccordée à au moins une branche de circuit pour assister la transconductance de la chute de courant, dans lequel en plus de la détection de l'occurrence de la première condition de consigne, qui est représentative du début de l'état de court-circuit en conséquence d'un transfert de goutte dans la deuxième phase de fonctionnement, une deuxième condition de consigne est détectée, qui est représentative de la fin de l'état de court-circuit immédiatement après le transfert de cette goutte.

2. Procédé selon la revendication 1, **caractérisé en ce que** pour la valeur instantanée du paramètre de processus de soudure des valeurs de mesure représentatives synchronisées avec la fréquence de synchronisation de la source d'alimentation à onduleur sont détectées.

3. Procédé selon la revendication 2, **caractérisé en ce que** la détection des valeurs de mesure représentatives de la valeur instantanée du paramètre de processus de soudure a lieu dans la pause d'impulsion (t₂) de la tension d'onduleur.

4. Procédé de commande d'un appareil de soudure selon la revendication 1, **caractérisé en ce que** pour la valeur instantanée du paramètre de processus de soudure une valeur de mesure représentative de la valeur momentanée de la tension de soudure (U) est détectée.

5. Procédé selon la revendication 4, **caractérisé en ce que** pour la valeur instantanée de la valeur de mesure représentative de la tension de processus de soudure la largeur de l'impulsion (t₁) de la tension d'onduleur est détectée.

6. Procédé de commande d'un appareil de soudure selon la revendication 1, **caractérisé en ce que** pour la valeur instantanée de la valeur de mesure représentative du paramètre de processus de soudure la valeur momentanée du courant de soudure (I) est détectée.

7. Procédé de commande d'un appareil de soudure selon la revendication 1, **caractérisé en ce que** pour la valeur instantanée de la valeur de mesure représentative du paramètre de processus de soudure la valeur momentanée de la résistance (R) est détectée.

8. Procédé de commande d'un appareil de soudure selon la revendication 1, **caractérisé en ce que** pour la valeur instantanée de la valeur de mesure représentative du paramètre de processus de soudure la valeur momentanée de la puissance de soudure (P) est détectée.

9. Procédé de commande d'un appareil de soudure selon la revendication 1, **caractérisé en ce que** pour la valeur instantanée de la valeur de mesure représentative du paramètre de processus de soudure la valeur momentanée d'un des paramètres son, champ électrique ou champ magnétique ainsi que rayonnement, notamment rayonnement thermique ou rayonnement de lumière, est détectée.

10. Procédé de commande d'un appareil de soudure selon la revendication 1, **caractérisé en ce que** la deuxième condition de consigne est déterminée par l'amplitude de la valeur instantanée du courant de soudure.

11. Procédé de commande d'un appareil de soudure selon la revendication 1, **caractérisé en ce que** la deuxième condition de consigne est déterminée par le produit des valeurs instantanées de la valeur de tension de soudure et du courant de soudure.

12. Procédé de commande d'un appareil de soudure selon la revendication 1, **caractérisé en ce que** la deuxième condition de consigne est déterminée par le quotient des valeurs instantanées de la valeur de tension de soudure et du courant de soudure.

13. Procédé de commande d'un appareil de soudure selon la revendication 1, **caractérisé en ce que** la deuxième condition de consigne est déterminée par des paramètres de processus prédéterminés, à savoir le son, le champ électrique ou le champ magnétique ou la rayonnement, notamment le rayonnement thermique ou le rayonnement de lumière.

14. Procédé de commande d'un appareil de soudure selon une des revendications précédentes, **caractérisé en ce que** la formation des fonctions des conditions de consigne est effectuée au moins partiellement par un logiciel.

15. Appareil de soudure pour la soudure à l'arc électrique à électrodes consommables avec une source d'alimentation électrique synchronisée alternativement alimentée par un courant alternatif, qui alimente au moins une branche de circuit pour alimenter un processus de soudure (9,10), dans lequel dans une première phase de fonctionnement entre l'électrode de soudure consommable (9) et la pièce à usiner (10) dans une atmosphère de gaz protecteur un arc électrique est allumé et l'électrode de soudure (9) est fondue en forme de goutte et dans une deuxième phase de fonctionnement le matériau fondu est transféré sur la pièce à usiner, **caractérisé en ce que** un moyen de synchronisation (2), un moyen de commande (6), un moyen de détecteur (11) et un moyen de consigne (15) sont prévus, qui sont réalisés de telle sorte que lors de l'occurrence d'une première et d'une deuxième condition de consigne pertinente pour le transfert de matériau pour la valeur instantanée d'un paramètre de processus de soudure, notamment courant, tension, puissance, résistance, une tension continue (5) inverse de la tension d'onduleur est raccordée à au moins une branche de circuit pour assister la transconductance de la chute de courant, dans lequel le moyen de synchronisation (2) est commandé par la fréquence de synchronisation de la source d'alimentation électrique à onduleur, et le moyen de synchronisation (2) ainsi que le moyen de détecteur (11) commandent la détection d'une grandeur représentative de la tension de processus de soudure pour la valeur instantanée ainsi que le moyen de commande (6), dans lequel un moyen de consigne (15) est coordonné au moyen de commande (6) de telle sorte que en plus de la détection de l'occurrence de la première condition de consigne, qui est représentative du début de l'état de court-circuit en conséquence d'un transfert de goutte dans la deuxième phase de fonctionnement, une deuxième condition de consigne soit détectée, qui est représentative de la fin de l'état de court-circuit immédiatement après la transfert de cette goutte.

16. Appareil de soudure selon la revendication 15, **caractérisé en ce que** le moyen de détecteur (11) est conçu pour détecter une grandeur représentative de la valeur instantanée du courant de soudure.

17. Appareil de soudure selon la revendication 15, **caractérisé en ce que** le moyen de détecteur (11) est conçu pour détecter directement lors du processus de soudure une valeur instantanée de la tension de processus de soudure.

18. Appareil de soudure selon la revendication 15, **caractérisé en ce que** il est conçu comme un appareil de soudure pour alimenter un processus de soudure par impulsion.
